# EUROPÄISCHE PATENTSCHRIFT

(11) **EP 2 802 451 B1**
(45) Veröffentlichungstag und Bekanntmachung des Hinweises auf die Patenterteilung: **04.05.2016**
(21) Anmeldenummer: 13700029.5
(22) Anmeldetag: 04.01.2013
(51) Int. Cl.: B32B 15/082, B32B 15/20, B32B 27/30, B32B 3/02, B32B 7/02, B32B 7/12

(54) **KANTENVERSIEGELTER SPIEGEL UND VERFAHREN ZU DESSEN HERSTELLUNG**
SEALED-EDGE MIRROR AND METHOD FOR PRODUCTION THEREOF
MIROIR À BORDS SCELLÉS ET SON PROCÉDÉ DE PRODUCTION

(30) Priorität: 13.01.2012 DE 102012100293
(43) Veröffentlichungstag der Anmeldung: 19.11.2014
(73) Patentinhaber: Hydro Aluminium Rolled Products GmbH, 41515 Grevenbroich (DE)
(72) Erfinder: DENKMANN, Volker, 47906 Kempen (DE); SCHENKEL, Wilhelm, 41515 Grevenbroich (DE); SIEMEN, Andreas, 41363 Jüchen (DE); HAMPEL, Ulrich, 41516 Grevenbroich (DE); EBERHARD, Sandra, 41363 Jüchen (DE)
(74) Vertreter: Cohausz & Florack
(86) Internationale Anmeldenummer: PCT/EP2013/050114
(87) Internationale Veröffentlichungsnummer: WO 2013/104569

(56) Entgegenhaltungen:
- US-A- 5 320 893
- US-A1- 2008 032 114

## Beschreibung

Die Erfindung betrifft einen Spiegel umfassend eine Spiegelfläche, welche aus einem Verbund aus einer Spiegelfolie und einem Substrat gebildet wird, wobei die Spiegelfolie auf dem Substrat angeordnet ist und mindestens eine Polymerschicht sowie eine unterhalb der mindestens einen Polymerschicht angeordnete Metallschicht aufweist. Daneben betrifft die Erfindung ein Verfahren zur Herstellung eines entsprechenden Spiegels sowie eine Vorrichtung zur Durchführung des Verfahrens.

Zur Erzeugung von regenerativer Energie werden Solarkraftwerke eingesetzt, welche eine große Anzahl von Spiegeln mit großen Flächen besitzen. Bedampfte Spiegelflächen aus Glas erscheinen angesichts der enorm großen Gesamtspiegelflächen, die für Solarkraftwerke benötigt werden als nicht wirtschaftlich nicht sinnvoll. Zur Erzeugung entsprechend großer Spiegelflächen muss daher auf ein besonders einfaches Verfahren zurückgegriffen werden, um derartig große Spiegelflächen wirtschaftlich bereitstellen zu können. Eine Maßnahme ist es, Spiegelflächen dadurch bereitzustellen, dass ein Substrat, welches in der Regel ein Metallblech beispielsweise aus Stahl, Aluminium oder einer Aluminiumlegierung ist, mit einer Spiegelfolie kaschiert wird. Die Spiegelfolie besteht aus einer Polymerschicht, welche beispielsweise aus einem PMMA-Kunststoff besteht und sich durch eine sehr große Transparenz auszeichnet. Auf der Rückseite der Polymerschicht kann eine Metallschicht, vorzugsweise eine Silberschicht aufgesputtert sein, welche lediglich eine Dicke beispielsweise im Nanometerbereich aufweist. Darüber hinaus werden auch zwei Metallschichten, beispielsweise eine erste Silberschicht, auf welche zusätzlich eine Kupferschicht aufgesputtert ist, verwendet. Die Metallschicht, insbesondere die Silberschicht weist eine extrem hohe Reflektivität auf, so dass Spiegelfolien mit sehr hoher Reflektivität bereitgestellt werden können. Werden diese beispielsweise auf ein Aluminiumblech, Stahlblech oder - band aufkaschiert, stehen kostengünstige Spiegelflächen zur Verfügung. Als Substrat kann selbstverständlich auch ein Verbundwerkstoff, welcher ebenfalls aus einem Polymer besteht dienen. Die Spiegel eines Solarkraftwerkes sind starken Witterungseinflüssen ungeschützt ausgesetzt. Insbesondre die für die Reflektivität wichtige Silberschicht neigt zur Korrosion, mit dem Effekt, dass die korrodierten Bereiche eine stark herabgesetzte Reflektivität haben, "blind" werden und als Spiegelflächen dann nicht mehr einsetzbar sind.

Die Kanten von entsprechenden Spiegeln wurden daher bisher vor Korrosion mit unterschiedlichen Verfahren geschützt. Beispielsweise wurde ein Klebeband als Kantenschutz verwendet, das nachträglich oder während der Produktion des Spiegels auf die Kanten aufgebracht wurde. Dieses Klebeband oder auch ein anderes Dichtmaterial, beispielsweise eine Kantenlackierung oder der Einsatz von Silikondichtmaterial, sollte verhindern, dass Feuchtigkeit zwischen die Polymerschicht und die Metallschicht, insbesondere die Silberschicht eindringt. Eindringende Feuchtigkeit hat nämlich zur Folge, dass die Metallschicht korrodiert und damit der Spiegel blind wird. Die Korrosion setzt sich vor allem aufgrund von Kapillarwirkungen über die gesamte Spiegelfläche fort, so dass in kurzer Zeit die gesamte Spiegelfläche betroffen ist. Die bisher getroffenen Maßnahmen zum Schutz der Spiegel vor Korrosion waren aufwändig und zeigten gleichzeitig Probleme in der Daueranwendung.

Aus dem US-Patent US 5,320,893 ist bekannt, die Korrosionsbeständigkeit eines Spiegels einer Doppelverglasung durch Einbringen eines Schnittes in den Verbund aus Spiegelfolie und Substrat im Bereich der Kanten und anschließendes Erwärmen des eingeschnittenen Bereichs und einfließen des Polymers der Spiegelfolie in den Schnittbereich zu verbessern.
Die US-Patentanmeldung US 2008/0032114 A1 offenbart Elemente zur Wärmeisolierung mit einer Luft und Feuchtigkeit durchlässigen Ultraschallschweißnaht, welche durch strukturierte Ultraschallsonotroden hergestellt wird.

Aufgabe der vorliegenden Erfindung ist es einen Spiegel vorzuschlagen, welcher auf einfache Weise herstellbar ist und gleichzeitig ein verbessertes Korrosionsverhalten aufweist. Darüber hinaus sollte ein Verfahren zur Herstellung eines solchen Spiegels sowie eine Vorrichtung zur Durchführung des Verfahrens vorgeschlagen werden.

Die aufgezeigte Aufgabe wird mit einem Spiegel, mit einem Verfahren zur Herstellung eines erfindungsgemäßen Spiegels sowie Vorrichtungen zur Durchführung des Herstellverfahrens mit den Merkmalen der Patentansprüche 1, 6, 12, 13 und 14 gelöst.

Gemäß einer ersten Lehre der vorliegenden Erfindung wird die aufgezeigte Aufgabe dadurch gelöst, dass zum Korrosionsschutz zumindest bereichsweise eine Versiegelungsnaht vorgesehen ist, welche durch stoffschlüssiges Verbinden der Polymerschicht mit dem Substrat gebildet wird, wobei die Metallschicht im Bereich der Versiegelungsnaht unterbrochen ist.

Die Versiegelungsnaht des erfindungsgemäßen Spiegels besteht also aus einem Bereich, in welchem die Metallschicht, insbesondere die Silberschicht unterbrochen ist und die Polymerschicht mit dem Substrat stoffschlüssig verbunden ist. Die stoffschlüssige Verbindung zwischen der oberhalb der Metallschicht angeordneten Polymerschicht mit dem Substrat ermöglicht, dass die in der Spiegelfläche verbliebene Metallschicht beispielsweise von den Kantenbereichen des Spiegels hermetisch getrennt wird und keine Korrosion fördernde Feuchtigkeit die Versiegelungsnaht durchwandern kann. Salzsprühtests haben gezeigt, dass die Spiegelflächen, welche vollständig von erfindungsgemäß aufgebauten Versiegelungsnähten umschlossen waren auch nach extrem langer Testdauer nicht zur Korrosion und nicht zum "Blind" werden neigen.

Erfindungsgemäß ist die Versiegelungsnaht eine Ultraschallschweißnaht. Ultraschallschweißen ermöglicht eine schonende Verbindung der Polymerschicht mit dem Substrat bei gleichzeitiger Durchtrennung der unterhalb der Polymerschicht angeordneten Silberschicht. Dies gilt auch für den Fall, dass eine zusätzliche Kupferschicht vorgesehen ist, welche beispielsweise zum Schutz der Silberschicht unterhalb der Silberschicht angeordnet ist.

Eine besonders kostengünstige Herstellung großer Spiegelflächen ermöglicht eine nächste Ausgestaltung des erfindungsgemäßen Spiegels dadurch, dass der Spiegel bandförmig ist und an den Längskanten mindestens jeweils eine in Längsrichtung des Bandes verlaufende Versiegelungsnaht aufweist. Hierdurch wird ein bandförmiger, bereits an den Längskanten versiegelter Spiegel bereitgestellt, welcher zum Beispiel vor Ort auf das entsprechende Maß geschnitten und an den dann auftretenden zusätzlichen Kanten beispielsweise von Hand versiegelt werden kann. Denkbar ist aber auch, dass der bandförmige Spiegel mit versiegelten Längskanten in Zuschnitte verarbeitet wird, welche dann automatisch mit einer oder mehrerer zusätzlicher, beispielsweise quer verlaufender, Versiegelungsnähten versehen werden.

Weist gemäß einer nächsten Ausführungsform des Spiegels die Spiegelfolie eine Polymerschicht aus PMMA auf, kann ein besonders gut ultraschallschweißbare Kunststoffschicht sowie ein hoch transparenter Kunststoff als Trägermaterial für die spiegelnde Metall- bzw. Silberschicht verwendet und der hergestellte Spiegel besonders leicht mit Versiegelungsnähten versehen werden.

Gemäß einer weiteren Ausgestaltung des Spiegels sind mehrere parallele Versiegelungsnähte vorgesehen. Mehrere parallele Versiegelungsnähte, beispielsweise eine Doppelnaht, haben zwar einen erhöhten Flächenbedarf, allerdings ergibt sich auch eine erhöhte Redundanz, falls in einer Versiegelungsnaht die Metallschicht nicht vollständig durchtrennt worden ist.

Ist gemäß einer nächsten Ausführungsform des Spiegels das Substrat ein Metall oder ein Verbundwerkstoff mit höherer Härte als die Polymerschicht kann auf einfache Weise die Versiegelungsnaht hergestellt werden, da das Ultraschallschweißen das Substrat nicht beeinträchtigt und lediglich die Polymerschicht, welche mit dem Substrat verbunden werden. Als Substrate kommen daher Stahl, Aluminium oder Aluminiumlegierungen aber auch Kunststoffverbundwerkstoffe mit höherer Härte in Frage. Bei Aluminiumlegierung sind AlMg1, AlMg1Mn1 oder höher legierte Aluminium-Magnesiumlegierungen bevorzugt, da diese bei geringer Dicke und Gewicht bereits die notwendige Stabilität bereitstellen können. Die Dicken der Substrate bestehend aus einer Aluminiumlegierung betragen beispielsweise 0,4 mm bis 1,5 mm. Typische, kostengünstige Bänder aus Aluminiumlegierungen mit guten Verarbeitungseigenschaften und sehr guten Festigkeitseigenschaften bezogen auf die Verwendung als Spiegel weise Bänder aus Aluminiumlegierungen vom Typ AA 3005 und AA 3105 bei den angegebenen Dicken auf.

Gemäß einer zweiten Lehre der vorliegenden Erfindung wird die aufgezeigte Aufgabe für ein Verfahren zur Herstellung eines Spiegels bestehend aus einem Verbund von Spiegelfolie und Substrat, bei welchem das Substrat mit einer Spiegelfolie, welche mindestens eine Polymerschicht und eine unterhalb der Polymerschicht angeordnete Metallschicht aufweist, kaschiert wird, dadurch gelöst, dass nach dem Kaschieren eine Versiegelungsnaht auf dem Spiegel erzeugt wird, wobei die Erzeugung der Versiegelungsnaht durch ein stoffschlüssiges Verbinden der Polymerschicht mit dem Substrat erfolgt, wobei in den Bereichen der Versiegelungsnaht die Metallschicht unterbrochen wird.

Wie bereit zuvor erläutert, wurde von den Erfindern erkannt, dass eine Unterbrechung der Silberschicht dazu führt, dass Korrosionsprozesse in einem Bereich der Silberschicht nicht in andere Bereiche der Silberschicht übergreifen können und damit die Spiegelfläche nicht eintrübt. Eine besonders gute Abdichtung der Unterbrechungsstelle der Silberschicht gelingt, indem die Polymerschicht mit dem Substrat stoffschlüssig verbunden wird, so dass diese Verbindung als Feuchtigkeitsbarriere genutzt werden kann.

Erfindungsgemäß wird die Versiegelungsnaht durch ein Ultraschallschweißen erzeugt, wobei die dazu notwendigen Ultraschallsonotroden einerseits die Polymerschicht zum Aufschmelzen bringen und andererseits durch gezieltes Anpressen die Metallschicht in den Bereichen der Versiegelungsnaht aufgetrennt und vollständig unterbrochen wird. Durch Ultraschallschweißen kann ein sehr sicheres Verbinden der Polymerschicht mit dem Substrat bei gleichzeitiger Unterbrechung der Metallschicht erfolgen.

Darüber hinaus ist das Ultraschallschweißen extrem lokal begrenzt, so dass keine Nachbarbereiche des Spiegels in Mitleidenschaft gezogen werden.

Gemäß einer ersten Ausgestaltung des erfindungsgemäßen Verfahrens sind das Substrat und die Spiegelfolie bandförmig, die Spiegelfolie wird auf das bandförmige Substrat kontinuierlich aufkaschiert und der so hergestellte Spiegel auf ein Coil aufgewickelt, wobei die Versiegelung der Längskanten des bandförmigen Spiegels durch Versiegelungsnähte entweder inline mit dem Kaschieren der Spiegelfolie oder durch erneutes Abwickeln des Spiegels von dem Coil in einem zusätzlichen Fertigungsschritt erfolgt. Bevorzugt ist die Herstellung der Versiegelungsnähte inline am bandförmigen Spiegel, da kein weiterer Arbeitsschritt anschließend benötigt wird, um die Längskanten des bandförmigen Spiegels zu versiegeln. In diesem Fall, aber auch für den Fall, dass das Coil mit dem bandförmigen Spiegel noch einmal abgewickelt wird, werden die Längskanten durch eine kontinuierliche Versieglung der Kantenbereiche, insbesondere durch ein Ultraschallschweißen, versiegelt. Es handelt sich dabei also um ein "Roll-to-roll"-Verfahren. Ein sogenanntes "Roll-to-sheet"-Verfahren wird gemäß einer weiteren Ausgestaltung dadurch bereitgestellt, dass das Substrat bandförmig ist und in flächige Substratzuschnitte geteilt wird, die Spiegelfolie anschließend auf die Substratzuschnitte aufkaschiert wird und die Substratzuschnitte mit aufkaschierter Spiegelfolie zumindest an den Längskanten mit jeweils mindestens einer Versiegelungsnaht versehen werden. Hierdurch können bereits an den Längskanten versiegelte Spiegelzuschnitte bereitgestellt werden, welche anschließend mit einer Versiegelungsnaht quer zu den in Längsrichtung verlaufenden Siegelnähten ausgestattet werden kann. Insbesondere besteht die Möglichkeit, die Zuschnitte bereits auf die entsprechende Spiegelgröße des herzustellenden Spiegels anzupassen und auch automatisch mit quer verlaufenden Versiegelungsnähten zu versehen. In diesem Fall können vollständig versiegelte Spiegel zur Verfügung.

Es hat sich gezeigt, dass die Versiegelungsnähte durch ein Ultraschallschweißen unter Verwendung von Ultraschallrollsonotroden und optionalen Ambossrollen mit besonders hoher Geschwindigkeit hergestellt werden können. Ultraschallrollsonotroden sowie die optionalen Ambossrollen als Gegenhalter ermöglichen insbesondere die Herstellung geradlinig verlaufender Versiegelungsnähte.

Vorzugsweise weist die Ultraschallrollsonotrodengeometrie einen Radius von 1,0 mm - 3,0 mm, vorzugsweise 1,5 mm - 2,5 mm auf. Durch die entsprechende Ultraschallrollsonotrodengeometrie wird gewährleistet, dass die Polymerschicht stoffschlüssig mit dem Substrat verbunden werden kann und gleichzeitig die Metallschicht im Bereich der Versiegelungsnaht vollständig unterbrochen wird. Es hat sich nämlich gezeigt, dass mit größeren Radien keine ausreichend sichere Unterbrechung der Metallschicht erreicht werden konnte. Werden Radien kleiner als 1,0 mm eingesetzt, besteht die Gefahr, dass das Substrat beim stoffschlüssigen Verbinden beschädigt wird.

Es hat sich darüber hinaus gezeigt, dass eine ausreichend prozesssichere Versiegelung durch eine Versiegelungsnaht dadurch erreicht werden kann, dass der Anpressdruck 1 bis 6 MPa, die Frequenz 20 - 60 kHz und die Amplitude der Ultraschallsonotrode zwischen 25 und 70 µm beträgt. Die genannten Parameter haben sich als sehr prozesssicher erwiesen, so dass die hergestellten Versiegelungsnähte eine hohe Dichtheit und damit einen sehr guten Schutz vor Korrosion der Spiegelfläche bewirkten. Gleichzeitig konnten auch ausreichend hohe Verarbeitungsgeschwindigkeiten erreicht werden, die eine wirtschaftliche Herstellung versiegelter Spiegel bestehend aus einer Spiegelfolie und einem Substrat ermöglicht.

Schließlich wird die oben aufgezeigte Aufgabe durch eine Vorrichtung zur Herstellung eines Spiegels umfassend eine Abwickelhaspel für ein bandförmiges Substrat, eine Kaschiervorrichtung zum Aufkaschieren der bandförmigen Spiegelfolie auf das bandförmige Substrat sowie mindestens zwei Ultraschallrollsonotroden, welche jeweils im Bereich der gegenüberliegenden Längskanten des bandförmigen Substrats und der Kaschiervorrichtung nachgeordnet angeordnet sind, so dass mit diesen der bandförmige Spiegel an den Längskanten versiegelt werden kann, wobei zusätzlich eine Aufwickelhaspel zum Aufwickeln des kantenversiegelten Spiegels vorgesehen ist. Die soeben beschriebene Vorrichtung ermöglicht einen Roll-to-roll-Prozess zur Herstellung eines kantenversiegelten, bandförmigen Spiegels. Dieser Prozess ist besonders wirtschaftlich. Der bandförmige Spiegel kann als Ausgangsmaterial am Standort des Solarkraftwerks zurechtgeschnitten und gegebenenfalls mit einer weiteren Versiegelungsnaht zum Einschließen der eigentlichen Spiegelfläche mit Siegelnähten ausgestattet werden. Darüber hinaus ist denkbar, bei der erfindungsgemäßen Vorrichtung Ambossrollen als Mittel zur Erzeugung eines Gegendrucks gegen die Ultraschallrollsonotroden vorzusehen, um mechanische Beeinträchtigungen des bandförmigen Substrats bei der Längskantenversiegelung zu vermeiden.

Gemäß einer nächsten Ausgestaltung der Vorrichtung ist nach der Abwickelhaspel für das Substrat eine Zuschneidevorrichtung vorgesehen, welche das Substrat vor oder nach dem Kaschieren in Zuschnitte schneidet und anstelle der Aufwickelhaspel eine Ablagevorrichtung für die zugeschnittenen Spiegel vorgesehen. Mit der soeben beschriebenen Vorrichtung können ausgehend von einem bandförmigen Substrat, beispielsweise einem Aluminiumlegierungsband zugeschnittene Spiegel mit Versiegelungsnähten an den Längskanten bereitgestellt werden, welche bereits an den Einsatzzweck angepasst bzw. zugeschnitten sind und lediglich mit einer quer verlaufenden Versiegelungsnaht versehen werden müssen, um die Spiegelfläche vollständig vor Korrosionseinflüssen zu schützen. Die quer verlaufenden Versiegelungsnähte können beispielsweise automatisch in einem nachfolgenden Fertigungsschritt hergestellt werden. Mit der soeben beschriebenen Vorrichtung ist ein sogenannter "Roll-to-sheet"-Prozess realisierbar.

Schließlich kann die Vorrichtung dadurch ausgestaltet werden, dass anstelle der Abwickelhaspel eine Aufnahme für zugeschnittene Substrate und deren Zuführung zum Kaschieren und Versiegeln vorgesehen ist. Diese Ausführung der erfindungsgemäßen Vorrichtung ermöglicht einen "Sheet-to-sheet"-Prozess, d.h. ausgehend von einem plattenförmigen Substrat die Herstellung eines plattenförmigen Spiegels mit Versiegelungsnähten an den Längskanten.

Im Weiteren soll die Erfindung anhand von Ausführungsbeispielen in Verbindung mit der Zeichnung näher erläutert werden. In der Zeichnung zeigt
- Fig. 1a) und b): schematisch den Aufbau eines Ausführungsbeispiels eines Spiegels bestehend aus einem Verbund aus einer Spiegelfolie und einem Substrat,
- Fig. 2: in einer schematischen Schnittansicht ein Ausführungsbeispiel zur Herstellung einer Versiegelungsnaht für einen Spiegel gemäß Fig. 1b),
- Fig. 3: ein weiteres Ausführungsbeispiel eines bandförmigen Spiegels,
- Fig. 4a) und b): in einer Draufsicht zwei weitere Ausführungsbeispiele eines Spiegels,
- Fig. 5: in einer schematischen perspektivischen Darstellung die Erzeugung der Versiegelungsnähte des Ausführungsbeispiels aus Fig. 3,
- Fig. 6: in einer schematischen Darstellung ein Ausführungsbeispiel einer Vorrichtung zur Herstellung eines Spiegels im "Roll-to-roll"-Prozess,
- Fig. 7: in einer schematischen Darstellung ein Ausführungsbeispiel einer Vorrichtung zur Herstellung eines Spiegels im "Roll-to-sheet"-Prozess und
- Fig. 8: eine schematische Darstellung eines Ausführungsbeispiels einer Vorrichtung zur Herstellung eines Spiegels im "Sheet-to-sheet"-Prozess.

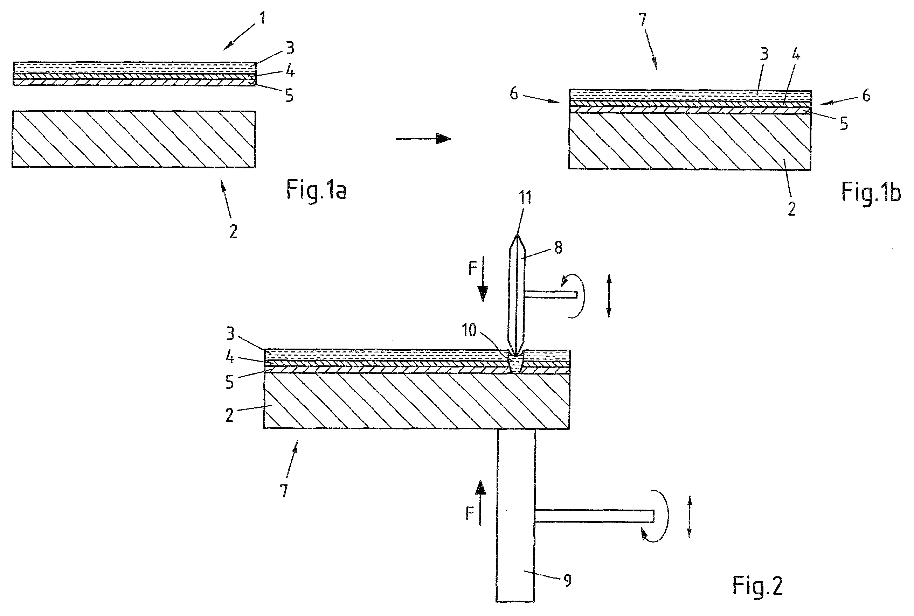

Fig. 1a) zeigt zunächst den grundsätzlichen Aufbau eines Spiegels bestehend aus einer Spiegelfolie 1 und einem Substrat 2. Die Spiegelfolie 1 weist vorzugsweise eine Polymerschicht 3 und eine Metallschicht 4 auf. Optional ist die Spiegelfolie 1, wie in dem vorliegenden Ausführungsbeispiel dargestellt, mit einer Haftschicht 5 versehen, welche ein Aufkaschieren der Spiegelfolie 1 auf das Substrat 2 ermöglicht. Das Substrat 2 kann, wie bereits erläutert, aus einem Metall, beispielsweise einem Stahl, Aluminium oder einer Aluminiumlegierung bestehen oder aber auch aus einem Verbundwerkstoff, welcher eine größere Härte als die Polymerschicht 1 der Spiegelfolie aufweist. Wird beispielsweise eine Aluminiumlegierung, bevorzugt eine Aluminiumlegierung vom Typ AA3005 oder AA3105 verwendet so ist das Substrat üblicherweise 0,1 - 2 mm, bevorzugt 0,4 - 1,3 mm dick. Optional kann das Substrat zusätzlich eine in Fig. 1a) und 1b) nicht dargestellte Konversionsschicht aufweisen, um die Oberfläche, beispielsweise eines Aluminiumlegierungsbandes, zu passivieren und für das Aufkaschieren der Spiegelfolie zu optimieren. Eine chemische Passivierung der Oberfläche eines Aluminiumlegierungsbandes ist insbesondere dann von Vorteil, wenn die für die Reflektion des Lichtes verantwortliche Metallschicht neben einer üblicherweise vorgesehenen Silberschicht zusätzlich eine Kupferschicht, welche zwischen Silberschicht und Substrat vorgesehen ist, aufweist. Im Prinzip besteht ferner die Möglichkeit eine Haftschicht 5 ebenfalls oder alternativ auf dem Substrat 2 vor dem Laminieren bzw. Aufkaschieren anzuordnen.

Durch Aufkaschieren bzw. Laminieren wird aus den beiden einzelnen Werkstoffen der Spiegelfolie 1 und dem Substrat 2 ein Spiegel 7, insbesondere ein Verbundspiegel hergestellt, wie er in einer schematischen Schnittdarstellung in Fig. 1b) dargestellt ist. Die Größenverhältnisse der einzelnen Schichten zueinander sind in der Zeichnung nicht maßstabsgetreu dargestellt, da insbesondere die Metallschicht 4, beispielsweise also die Silberschicht, lediglich wenige Nanometer dick ist. Die transparente Polymerschicht 3 ist dagegen deutlich dicker. Die Dicke der Polymerschicht 3 liegt im Mikrometerbereich. Ist nun ein entsprechend aufgebauter Spiegel Feuchtigkeit ausgesetzt, so dringt die Feuchtigkeit über die Kanten 6 des Spiegels in der Metallschicht 4 von Außen nach Innen vor. Besteht die Metallschicht 4 beispielsweise aus einer Silberschicht kommt es zur Korrosion derselben und im schlimmsten Fall zur Delamination der transparenten Polymerschicht 3. Im Ergebnis wird durch die Korrosion die Reflektivität der Metallschicht 4 bzw. des Spiegels 7 extrem herabgesetzt, so dass bis der Spiegel 7 keine spiegelnden Eigenschaften mehr aufweist. Mit anderen Worten der Spiegel wird blind.

In Fig. 2 ist nun in einer schematischen Schnittansicht ein Ausführungsbeispiel zur Herstellung einer Versiegelungsnaht dargestellt, welche die Korrosion und damit das Erblinden des Spiegels 7 verhindert. Die Polymerschicht 3, welche vorzugsweise aus einem PMMA-Kunststoff besteht, des bandförmigen Spiegels 7 wird durch die Verwendung einer Ultraschallrollsonotrode 8 und einer Ambossrolle 9 mit dem Substrat 2 derart verschweißt, dass im Bereich der Versiegelungsnaht 10 die Metallschicht 4 vollständig unterbrochen ist. Wie in Fig. 2 zu erkennen ist, wird eine stoffschlüssige Verbindung der Polymerschicht 3 mit dem Substrat hergestellt. Dies führt dazu, dass die von außen in den Kanten 6 eindringende Feuchtigkeit unmittelbar an der Versiegelungsnaht 10 in dem Maße gestoppt wird, dass die mit einer entsprechenden Versiegelungsnaht 10 eingeschlossenen Spiegelflächen bei einem Salzsprühtest über mehrere Wochen korrosionsfrei und voll in Takt blieben. Es hat sich gezeigt, dass durch ein Ultraschallschweißen der Polymerschicht 3 auf das Substrat 2 eine sehr gute Versiegelung der Spiegelflächen prozesssicher erreicht werden kann. Die Ultraschallrollsonotrode 8 weist hierzu vorzugsweise einen Radius 11 von 1,0 mm - 3,0 mm, besonders bevorzugt 1,5 mm - 2,5 mm auf. Es ist aber auch möglich, die in Fig. 2 dargestellte Ambossrolle 9 als Ultraschallrollsonotrode zu verwenden und die Kontur der Versiegelungsnaht 10 durch eine mit einem entsprechenden Radius ausgestattete Ambossrolle, welche dann selber keine Ultraschallschwingungen ausführt, zu erreichen.

Vorzugsweise sind sowohl die Ambossrolle 9 als auch die Ultraschallrollsonotrode 8 über einen Antrieb derart angetrieben, dass diese eine Rollbewegung mit Bandlaufgeschwindigkeit vollziehen. Darüber hinaus muss sowohl die Ultraschallrollsonotrode 8 als auch die Ambossrolle 9 mit einem gewissen Anpressdruck gegeneinander gedrückt werden, um die Erzeugung einer Versiegelungsnaht mit einer Unterbrechung der Metallschicht 4 zu erzielen. In dem vorliegenden Ausführungsbeispiel mit einer PMMA-Polymerschicht 3 und einem Aluminiumlegierungssubstrat 2 aus einer Aluminiumlegierung vom Typ AA3105 waren Anpressdrücke von 2 - 4 bar ausreichend, um prozesssicher eine Versiegelungsnaht herzustellen. Bei Versuchen zeigte sich zudem, dass die Wahl der Geometrie der Ultraschallsonotrode bzw. der Ambossrolle Einfluss auf die Qualität der Versiegelungsnaht 10 haben kann. So konnte mit einem Radius von 8,5 mm unabhängig von den eingestellten Anpressdrücken oder der eingespeisten Ultraschallleistung keine ausreichend dichte Versiegelungsnaht 10 erzeugt werden.
Die Ultraschallfrequenz betrug bei den Versuchen 20 kHz mit einer Amplitude der eingesetzten Ultraschallrollsonotroden von 40 µm sowie einer Leistung von 500 W. Die Ergebnisse der entsprechenden Versuche sind in Tabelle 1 dargestellt.

| Versuch | Radius Ultraschallrollsonotrode (mm) | Leistung | Anpressdruck Ultraschallrollsonotrode (MPa) | Ergebnis im Salzsprühtest nach 10 Wochen |
|---|---|---|---|---|
| V1 | 8,5 | 33% | 0,6 | -- |
| V2 | 8,5 | 33% | 2 | -- |
| V3 | 8,5 | 33% | 6 | -- |
| V4 | 8,5 | 100% | 6 | -- |
| V5 | 1,5 | 100% | 2 | ++ |
| V6 | 2,5 | 100% | 4 | ++ |

In den Versuchen V1 bis V4 zeigte sich, dass bei dem Salzsprühtest es zu einer Korrosion der Silberschicht unterhalb der Polymerschicht kam und damit das Ergebnis als schlecht (--) bewertet wurde. Die Versuche V5 und V6 zeigten dagegen überhaupt keine Korrosion und wurden daher als sehr gut (++) bewertet.

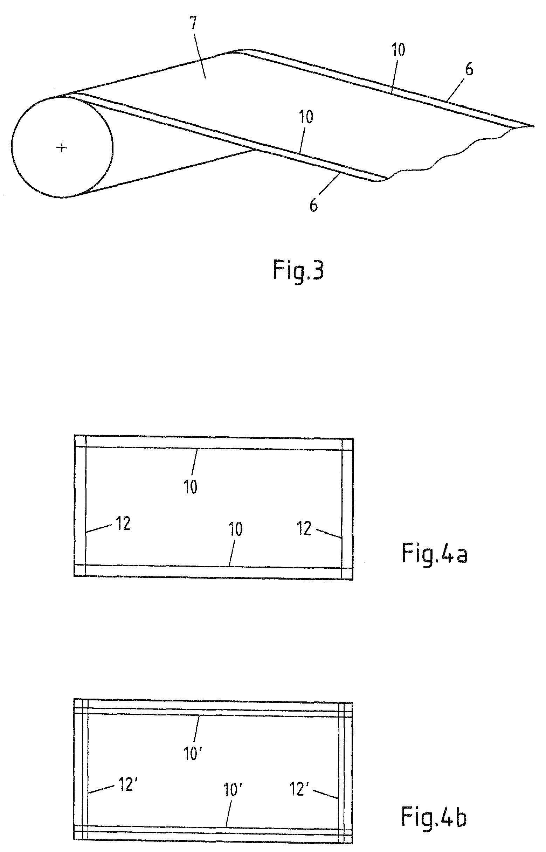

In Fig. 3 ist nun ein bandförmiger Spiegel 7 gemäß einem weiteren Ausführungsbeispiel in perspektivischer Darstellung gezeigt. Der bandförmige Spiegel 7 weist zwei Versiegelungsnähte 10, welche jeweils in dem Bereich der Kanten 6 des bandförmigen Spiegels 7 angeordnet sind. Der bandförmige Spiegel 7 kann wie in Fig. 3 dargestellt als Coil aufgewickelt und zur Herstellung von auf die Anwendung spezifisch zugeschnittene, vollständig versiegelte Spiegel verwendet werden. Der bandförmige Spiegel 7 ermöglicht eine besonders wirtschaftliche Herstellung von entsprechend zugeschnittenen Spiegelelementen.

Entsprechende Spiegelelemente zeigen die Fig. 4a) und 4b) in einer Draufsicht. Fig. 4a) zeigt ein Ausführungsbeispiel eines Spiegels hergestellt aus einem bandförmigen Spiegel 7, welcher rechteckig zugeschnitten ist und neben den bei der Herstellung des bandförmigen Spiegels 7 hergestellten, an den Längskanten vorgesehenen Versiegelungsnähten 10 zusätzlich quer verlaufende Versiegelungsnähte 12 aufweist. Die zusätzlich vorgesehenen quer verlaufenden Versiegelungsnähte 12 können auf identische Art und Weise, wie es in Fig. 2 dargestellt ist, eingebracht werden. Es ist natürlich auch denkbar, dass auch die Versiegelungsnähte 10, welche entlang der Längskanten des Spiegels verlaufen an einem fertig zugeschnittenen Blech und damit diskontinuierlich erzeugt werden. Die Versiegelungsnähte 10, 12 können auch durch ein Handgerät erzeugt werden. Denkbar ist daneben auch ein getakter Prozess, so dass Formatkanten, also nicht nur geradlinig verlaufende Kantenbereiche, versiegelt werden können.

Wählt man für die Geometrie der Ultraschallrollsonotrode oder der Ambossrolle die Form eines Doppelhöckers mit zwei Radien so kann beispielsweise eine doppelte Versiegelungsnaht 11' bzw. 12' in Längsrichtung oder auch in Querrichtung zur Längserstreckung des Spiegels eingebracht werden, wie sie in Fig. 4b) dargestellt ist. Eine doppelte Versiegelungsnaht 11', 12' erhöht zusätzlich die Sicherheit vor einem Erblinden des Spiegels, falls eine undichte Stelle in einem Bereich einer Versiegelungsnaht vorhanden ist.

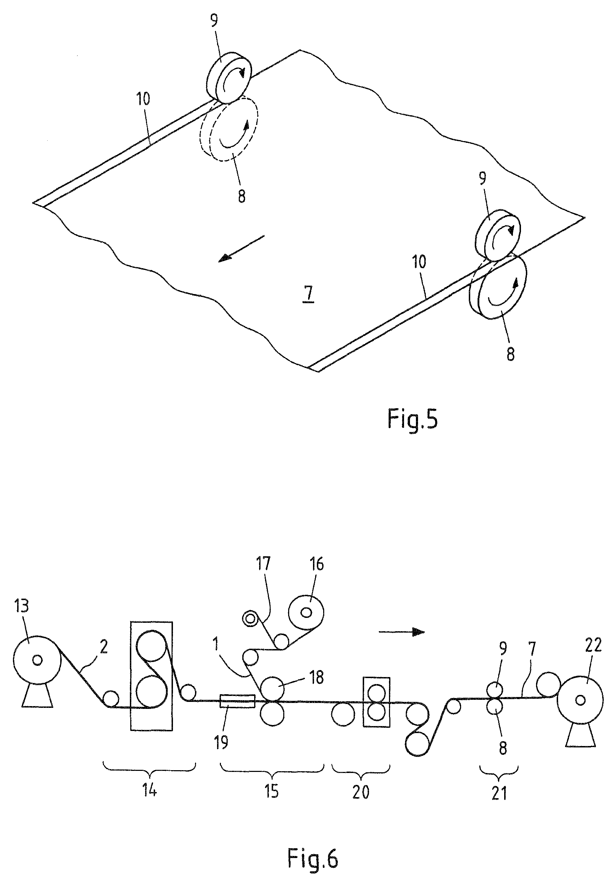

Fig. 5) zeigt in einer schematischen, perspektivischen Darstellung ein Ausführungsbeispiel, wie ein bandförmiger Spiegel 7 mit an den Längskanten angeordneten Versiegelungsnähten 10 hergestellt wird. In dem in Fig. 5) dargestellten Ausführungsbeispiel ist die Ultraschallrollsonotrode auf der unteren Seite des Bandes, also auf der Substratseite vorgesehen, wohingegen die die Versiegelungsnahgeometrie aufweisende Ambossrolle 9 auf der Seite der Polymerschicht 3 angeordnet ist. Im Unterschied zu dem in Fig. 2) dargestellten Ausführungsbeispiel ist die Position von Ultraschallrollsonotrode und Ambossrolle vertauscht, wobei die Ambossrolle den entsprechenden Radius von 1,0 mm bis 3,0 mm aufweist. Auf diese Weise kann ebenfalls eine sehr gute Versiegelungsnaht hergestellt werden.

Ein entsprechender Aufbau findet sich auch in den weiteren Fig. 6, 7 und 8 wieder. Fig. 6 zeigt ein Ausführungsbeispiel einer Vorrichtung zur Durchführung eines "Roll-to-roll"-Prozesses zur Herstellung eines bandförmigen Spiegels 7 mit Versiegelungsnähten 10 in den Längskantenbereichen. Hierzu wird zunächst eine Abwickelhaspel 13 benötigt, auf welcher das Substrat, beispielsweise ein Aluminiumlegierungsband bestehend aus einer Aluminiumlegierung vom Typ AA 3005 oder AA 3105 in Form eines Coils aufgenommen werden kann. Das bandförmige Substrat wird über eine Umlenkrollengeometrie 14 einer Kaschiervorrichtung 15 zugeführt, welche auf einem Coil 16 die mit einer Schutzfolie 17 versehene Spiegelfolie 1 aufweist. Die Schutzfolie 17 ist auf der Haftschicht 5 angebracht und ermöglicht die einfache Handhabung der Spiegelfolie 1 in Coil-Format. Die Spiegelfolie 1 wird über Kaschierwalzen 18 auf das optional zuvor über eine Heizvorrichtung 19 erwärmte Substrat 2, vorzugsweise ein Band aus einer Aluminiumlegierung vom Typ AA3005 oder AA3105 unter Anwendung von Druck und Wärme mit den Kaschierwalzen 18 aufkaschiert. Der so hergestellte Verbund aus Spiegelfolie 1 und Substrat 2 wird über eine Kühlungswalzenvorrichtung 20 einer Vorrichtung zur Erzeugung einer Versiegelungsnaht 21 bestehend aus einer Ambossrolle 9 und einer Ultraschallrollsonotrode 8 zugeführt. Anschließend wird der bandförmige Spiegel 7, welcher jetzt zwei Versiegelungsnähte entlang seiner Längskanten aufweist zu einem Coil 22 aufgewickelt. Es ist leicht vorstellbar, dass dieser Herstellprozess besonders wirtschaftlich erfolgt und mit einer hohen Produktivität verbunden ist. Das so hergestellte Coil eines bandförmigen Spiegels 7 mit Versiegelungsnähten entlang seiner Längskanten kann in einem weiteren Fertigungsschritt in die gewünschten Spiegelflächen zugeschnitten und mit entsprechenden zusätzlichen Versiegelungsnähten versehen werden, so dass die Spiegelfläche vollumfänglich durch Versiegelungsnähte 10, 12 vor Korrosion geschützt ist.

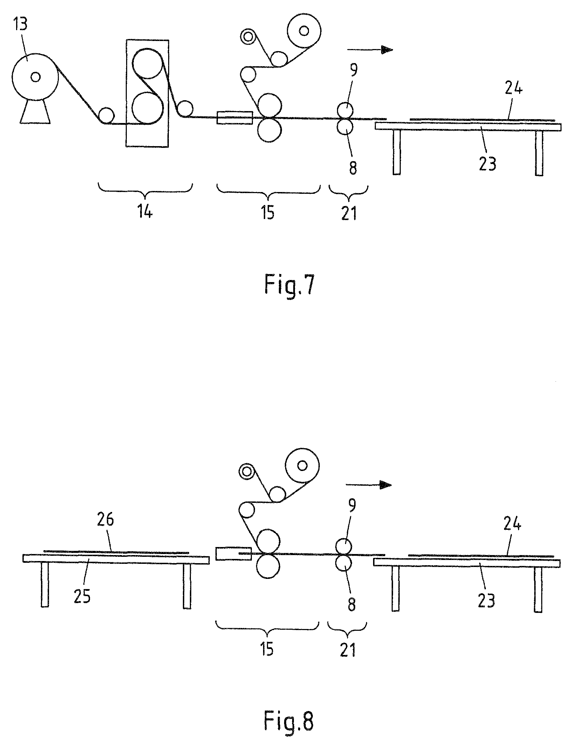

Das Zuschneiden in die benötigten Spiegelflächen kann auch unmittelbar im Anschluss an die Erzeugung der an den Längskanten 6 des bandförmigen Spiegels angeordneten Versiegelungsnähten 10 erfolgen. Ein Ausführungsbeispiel zur Durchführung eines entsprechenden "Roll-to-sheet"-Prozesses zeigt Fig. 7. Im Vergleich zu Fig. 6 ist im Anschluss an die Kaschiervorrichtung 15 unmittelbar eine Vorrichtung 21 zur Erzeugung der Versiegelungsnähte 10 bestehend aus einer Ambossrolle 9 und einer Ultraschallrollsonotrode 8 vorgesehen. Im Anschluss an die Erzeugung der Versiegelungsnähte 10 wird auf dem Ablagetisch 23 der einlaufende, bandförmige Spiegel 7 in Zuschnitte 24 zugeschnitten. Die Zuschneidevorrichtung ist in Fig. 7 jedoch nicht dargestellt. Der zugeschnittene Spiegel 24 kann dann über den Ablagetisch weiteren Verarbeitungsschritten, beispielsweise der Erzeugung der quer verlaufenden Versiegelungsnähte 12 oder 12' zugeführt werden.

Schließlich zeigt Fig. 8 ein weiteres Ausführungsbeispiel einer Vorrichtung zur Durchführung eines "Sheet-to-sheet"-Prozesses, bei welchem im Vergleich zu den Ausführungsbeispielen in Fig. 6 und Fig. 7 anstelle der Abwickelhaspel 13 ein Aufnahmetisch 25 zur Aufnahme von plattenförmigen, zugeschnittenen Substraten 26 dient, welche dann mit einer Spiegelfolie 1 in einer Kaschiervorrichtung 15 kaschiert werden und mit an den Längskanten verlaufenden Versiegelungsnähten 10 unter Verwendung der Vorrichtung 21 versehen werden. Die mit an den Längskanten verlaufenden Versiegelungsnähten ausgestatteten Spiegelflächen werden auf einem Ablagetisch 23 abgelegt und für die weiteren Bearbeitungsschritte, insbesondere zur Erzeugung quer verlaufender Versiegelungsnähte weiter transportiert.

## Patentansprüche

1. Spiegel umfassend eine Spiegelfläche, welche aus einem Verbund aus einer Spiegelfolie (1) und einem Substrat (2) gebildet wird, wobei die Spiegelfolie (1) auf dem Substrat (2) angeordnet ist und mindestens eine Polymerschicht (3) sowie eine unterhalb der mindestens einen Polymerschicht (3) angeordnete Metallschicht (4) aufweist,
**dadurch gekennzeichnet, dass**
zum Korrosionsschutz zumindest bereichsweise eine Versiegelungsnaht (10) vorgesehen ist, welche durch ein stoffschlüssiges Verbinden der Polymerschicht (3) mit dem Substrat (2) gebildet wird, wobei die Metallschicht (4) im Bereich der Versiegelungsnaht (10) unterbrochen ist, wobei die Versiegelungsnaht (10) eine Ultraschallschweißnaht ist.

2. Spiegel nach Anspruch 1,
**dadurch gekennzeichnet, dass**
der Spiegel (7) bandförmig ist und an den Längskanten (6) mindestens jeweils eine in Längsrichtung des Bandes verlaufende Versiegelungsnaht (10) aufweist.

3. Spiegel nach einem der Ansprüche 1 oder 2,
**dadurch gekennzeichnet, dass**
die Spiegelfolie (1) eine Polymerschicht (3) aus einem Polymethylmethacrylat(PMMA) aufweist.

4. Spiegel nach einem der Ansprüche 1 bis 3,
**dadurch gekennzeichnet, dass**
mehrere parallel verlaufende Versiegelungsnähte (10',12') vorgesehen sind.

5. Spiegel nach einem der Ansprüche 1 bis 4,
**dadurch gekennzeichnet, dass**
das Substrat (2) ein Metall oder ein Verbundwerkstoff mit höherer Härte als die Polymerschicht ist.

6. Verfahren zur Herstellung eines Spiegels bestehend aus einem Verbund von Spiegelfolie und Substrat nach einem der Ansprüche 1 bis 5, bei welchem das Substrat mit einer Spiegelfolie, welche mindestens eine Polymerschicht und eine unterhalb der Polymerschicht angeordnete Metallschicht aufweist, kaschiert wird,
**dadurch gekennzeichnet, dass**
nach dem Kaschieren eine Versiegelungsnaht auf dem Spiegel erzeugt wird, wobei die Erzeugung der Versiegelungsnaht durch ein stoffschlüssiges Verbinden der Polymerschicht mit dem Substrat erfolgt, wobei in den Bereichen der Versiegelungsnaht die Metallschicht unterbrochen wird und wobei die Versiegelungsnaht durch ein Ultraschallschweißen erzeugt wird.

7. Verfahren nach Anspruch 6,
**dadurch gekennzeichnet, dass**
das Substrat und die Spiegelfolie bandförmig sind, die Spiegelfolie auf das bandförmige Substrat kontinuierlich aufkaschiert wird und der so hergestellte Spiegel auf ein Coil gewickelt wird, wobei die Versiegelung der Längskanten des bandförmigen Spiegels durch Versiegelungsnähte entweder inline mit dem Kaschieren der Spiegelfolie oder durch erneutes Abwickeln des Spiegels von dem Coil in einem zusätzlichen Fertigungsschritt erfolgt.

8. Verfahren nach Anspruch 6,
**dadurch gekennzeichnet, dass**
das Substrat bandförmig ist und in flächige Substratzuschnitte geteilt wird, die Spiegelfolie auf die Substratzuschnitte aufkaschiert wird und die Substratzuschnitte mit aufkaschierter Spiegelfolie zumindest an den Längskanten mit jeweils mindestens einer Versiegelungsnaht versehen werden.

9. Verfahren nach einem der Ansprüche 6 bis 8,
**dadurch gekennzeichnet, dass**
die Versiegelungsnähte durch ein Ultraschallschweißen unter Verwendung von Ultraschallrollsonotroden und optionalen Ambossrollen hergestellt werden.

10. Verfahren nach Anspruch 9,
**dadurch gekennzeichnet, dass**
die Ultraschallrollsonotroden einen Radius von 1,0 mm bis 3,0 mm aufweisen.

11. Verfahren nach einem der Ansprüche 9 oder 10,
**dadurch gekennzeichnet, dass**
der Anpressdruck zwischen 1 MPa bis 6 MPa, die Frequenz 20 bis 60 kHz und die Amplitude zwischen 25 und 70 µm betragen.

12. Vorrichtung zur Herstellung eines Spiegels nach einem der Ansprüche 1 bis 5, umfassend
- eine Abwickelhaspel (13) für ein bandförmiges Substrat (2),
- eine Kaschiervorrichtung (15) zum Aufkaschieren der bandförmigen Spiegelfolie (1) auf das bandförmige Substrat (2) sowie
- mindestens zwei Ultraschallrollsonotroden (8), welche jeweils im Bereich der gegenüberliegenden Längskanten (6) des bandförmigen Substrats (2) und der Kaschiervorrichtung (15) nachgeordnet angeordnet sind, so dass mit diesen der bandförmige Spiegel (7) an den Längskanten (6) durch eine Ultraschallschweißnaht versiegelt werden kann, wobei
- zusätzlich eine Aufwickelhaspel (22) zum Aufwickeln des kantenversiegelten Spiegels (7) vorgesehen ist.

13. Vorrichtung zur Herstellung eines Spiegels nach einem der Ansprüche 1 bis 5, aufweisend die Merkmale des Anspruchs 12, wobei jedoch nach der Abwickelhaspel für das Substrat eine Zuschneidevorrichtung vorgesehen ist, welche das Substrat (2) vor oder nach dem Kaschieren in Zuschnitte (24) schneidet und anstelle der Aufwickelhaspel eine Ablagevorrichtung (23) für die zugeschnittenen Spiegel vorgesehen ist.

14. Vorrichtung zur Herstellung eines Spiegels nach einem der Ansprüche 1 bis 5, aufweisend die Merkmale des Anspruchs 12 oder des Anspruchs 13, wobei jedoch anstelle der Abwickelhaspel eine Aufnahme (25) für zugeschnittene Substrate (26) und deren Zuführung zum Kaschieren und Versiegeln vorgesehen ist.

## Claims

1. Mirror comprising a reflective surface which is formed of a composite from a reflective film (1) and a substrate (2), wherein the reflective film (1) is disposed on the substrate (2) and comprises at least one polymer layer (3) and a metal layer (4) disposed underneath the at least one polymer layer (3), **characterised in that** at least one sealing seam (10) is provided for corrosion protection at least in certain areas, which sealing seam (10) is formed by bonding the polymer layer (3) to the substrate (2) in a material-locking manner, wherein the metal layer (4) is interrupted in the area of the sealing seam (10), wherein the sealing seam (10) is an ultrasonic weld.

2. Mirror according to claim 1, **characterised in that** the mirror (7) is band-shaped and comprises at least one sealing seam (10) extending, respectively, along the longitudinal edges (6) in longitudinal direction of the band.

3. Mirror according to claim 1 or 2, **characterised in that** the reflective film (1) comprises a polymer layer (3) from a polymethyl methacrylate (PMMA).

4. Mirror according to one of the claims 1 to 3, **characterised in that** several sealing seams (10', 12') extending in parallel are provided.

5. Mirror according to one of the claims 1 to 4, **characterised in that** the substrate (2) is a metal or a composite material with a hardness higher than that of the polymer layer.

6. Method for manufacturing a mirror consisting of a composite of reflective film and substrate according to one of claims 1 to 5, in which the substrate is laminated to a reflective film comprising at least one polymer layer and a metal layer disposed underneath the polymer layer, **characterised in that** following laminating, a sealing seam is produced on the mirror, wherein the sealing seam is produced by bonding the polymer layer to the substrate in a material-locking manner, wherein the metal layer is interrupted in the areas of the sealing seam, and wherein the sealing seam is produced by ultrasonic welding.

7. Method according to claim 6, **characterised in that** the substrate and the reflective film are band-shaped, the reflective film is laminated continuously to the band-shaped substrate and the mirror produced in this way is wound onto a coil, wherein sealing of the longitudinal edges of the band-shaped mirror by means of sealing seams is effected either inline together with laminating the reflective film or by renewed unwinding of the mirror from the coil in an additional process step.

8. Method according to claim 6, **characterised in that** the substrate is band-shaped and divided into areal substrate blanks, the reflective film is laminated onto the substrate blanks and the substrate blanks with the laminated-on reflective film are provided, at least along the longitudinal edges, with at least one sealing seam, respectively.

9. Method according to one of the claims 6 to 8, **characterised in that** the sealing seams are produced by ultrasonic welding using ultrasonic roller sonotrodes and optional anvil rollers.

10. The method according to claim 9, **characterised in that** the ultrasonic roller sonotrodes comprise a radius of 1.0 mm - 3.0 mm.

11. Method according to claim 9 or 10, **characterised in that** the contact pressure is between 1 MPa and 6 MPa, the frequency is 20 to 60 kHz and the amplitude is between 25 and 70 µm.

12. Device for manufacturing a mirror according to one of claims 1 to 5, comprising
- a decoiler (13) for a band-shaped substrate (2),
- a laminating device (15) for laminating the band-shaped reflective film (1) onto the band-shaped substrate (2) as well as
- at least two ultrasonic roller sonotrodes (8), which are arranged, respectively, in the region of the opposing longitudinal edges (6) of the band-shaped substrate (2) and downstream of the laminating device (15), allowing them to be used for sealing the band-shaped mirror (7) along the longitudinal edges (6), wherein
- a coiler (22) is additionally provided for winding the edge-sealed mirror (7).

13. Device for manufacturing a mirror according to any one of claims 1 to 5, comprising the features of claim 12, wherein a blank-cutting device is provided downstream of the decoiler for the substrate, which blank-cutting device cuts the substrate (2) before or after the laminating process into blanks (24), and a depositing table (23) is provided instead of the coiler for the cut-to-size mirrors.

14. Device for manufacturing a mirror according to any one of claims 1 to 5, comprising the features of claim 12 or claim 13, wherein instead of the decoiler, a receptacle (25) for cut-to-size substrates (26) and a feed for feeding the same for laminating and sealing is provided.

## Revendications

1. Miroir comprenant une surface réfléchissante formée à partir d'un composite comprenant un film réfléchissant (1) et un substrat (2), le film réfléchissant (1) étant disposé sur le substrat (2) et comportant au moins une couche polymère (3) et une couche métallique (4) disposée en dessous de l'au moins une couche polymère (3),
**caractérisé en ce que**
pour empêcher la corrosion au moins par régions, il est prévu une soudure de scellement (10) formée par un assemblage par liaison de matière entre la couche polymère (3) et le substrat (2), la couche métallique (4) étant interrompue dans la région de la soudure de scellement (10), la soudure de scellement (10) étant un joint de soudure par ultrasons.

2. Miroir selon la revendication 1,
**caractérisé en ce que**
le miroir (7) se présente sous la forme d'une bande et comporte au moins une soudure de scellement (10) au niveau des bords longitudinaux (6), laquelle s'étend dans le sens longitudinal de la bande.

3. Miroir selon l'une des revendications 1 ou 2,
**caractérisé en ce que**
le film réfléchissant (1) comporte une couche polymère (3) constituée d'un polyméthylméthacrylate (PMMA).

4. Miroir selon l'une des revendications 1 à 3,
**caractérisé en ce que**
il est prévu plusieurs soudures de scellement (10', 12') s'étendant parallèlement.

5. Miroir selon l'une des revendications 1 à 4,
**caractérisé en ce que**
le substrat (2) est un métal ou un matériau composite avec une dureté supérieure à celle de la couche polymère.

6. Procédé pour la fabrication d'un miroir constitué d'un composite comprenant un film réfléchissant et un substrat selon l'une des revendications 1 à 5, dans lequel le substrat est laminé avec un film réfléchissant comportant au moins une couche polymère et une couche métallique disposée en dessous de la couche polymère,
**caractérisé en ce que**
suite au laminage, une soudure de scellement est réalisée sur le miroir, la réalisation de la soudure de scellement étant effectuée par un assemblage par liaison de matière entre la couche polymère et le substrat, la couche métallique étant interrompue dans les régions de la soudure de scellement, et la soudure de scellement étant réalisée par un soudage par ultrasons.

7. Procédé selon la revendication 6,
**caractérisé en ce que**
le substrat et le film réfléchissant se présentent sous la forme d'une bande, **en ce que** le film réfléchissant est laminé en continu sur le substrat en forme de bande et le miroir ainsi réalisé est enroulé sur une bobine, le scellement des bords longitudinaux du miroir en forme de bande par des soudures de scellement est effectué soit en ligne avec le laminage du film réfléchissant, soit en déroulant à nouveau le miroir de la bobine au cours d'une étape de fabrication supplémentaire.

8. Procédé selon la revendication 6,
**caractérisé en ce que**
le substrat se présente sous la forme d'une bande, tout en étant divisé en découpes de substrat planes, **en ce que** le film réfléchissant est laminé sur les découpes de substrat, et les découpes de substrat avec le film réfléchissant laminé dessus sont respectivement pourvues d'au moins une soudure de scellement sur les bords longitudinaux.

9. Procédé selon l'une des revendications 6 à 8,
**caractérisé en ce que**
les soudures de scellement sont réalisées par un soudage par ultrasons à l'aide de sonotrodes à ultrasons et de rouleaux enclumes facultatifs.

10. Procédé selon la revendication 9,
**caractérisé en ce que**
les sonotrodes à ultrasons présentent un rayon compris entre 1,0 mm et 3,0 mm.

11. Procédé selon l'une des revendications 9 à 10,
**caractérisé en ce que**
la pression d'appui mesure entre 1 MPa et 6 MPa, la fréquence entre 20 et 60 kHz, et l'amplitude entre 25 et 70 µm.

12. Dispositif pour la fabrication d'un miroir selon l'une des revendications 1 à 5, comprenant
- un dérouleur (13) pour un substrat en forme de bande (2),
- un dispositif de laminage (15) pour le laminage du film réfléchissant en forme de bande (1) sur le substrat en forme de bande (2), et
- au moins deux sonotrodes à ultrasons (8) respectivement agencés dans la région des bords longitudinaux opposés (6) du substrat en forme de bande (2) et en aval du dispositif de laminage (15), de manière à pouvoir souder le miroir en forme de bande (7) sur les bords longitudinaux (6) à l'aide d'une soudure de scellement par ultrasons, dans lequel
- en addition un enrouleur (22) est prévu pour l'enroulement du miroir (7) soudés sur les bords.

13. Dispositif pour la fabrication d'un miroir selon l'une des revendications 1 à 5, comprenant les caractéristiques de la revendication 12, mais dans lequel un dispositif de coupe pour le substrat est prévu en aval du dévidoir, pour couper le substrat (2) en découpes (24) avant ou après le laminage, et dans lequel il est prévu un dispositif de dépôt (23) à la place de l'enrouleur, pour les découpes de miroir.

14. Dispositif pour la fabrication d'un miroir selon l'une des revendications 1 à 5, comprenant les caractéristiques de la revendication 12 ou de la revendication 13, mais dans lequel il est prévu un logement (25) à la place de l'enrouleur, pour les découpes de substrat (26) et l'alimentation de celles-ci vers le laminage et le soudage.
